(19) Europäisches Patentamt
European Patent Office
Office européen des brevets

(11) EP 1 076 084 B1

(12) EUROPÄISCHE PATENTSCHRIFT

(45) Veröffentlichungstag und Bekanntmachung des Hinweises auf die Patenterteilung:
**09.10.2002 Patentblatt 2002/41**

(51) Int Cl.[7]: **C09K 11/81**, H01J 61/44, H01J 61/46

(21) Anmeldenummer: **00124154.6**

(22) Anmeldetag: **05.04.1994**

(54) **Leuchtstoffe fuer Beleuchtungszwecke**

Lumninescent materials for illumination purposes

Matériaux luminescents pour dispositifs d'illumination

(84) Benannte Vertragsstaaten:
**BE CH DE FR GB IT LI NL SE**

(30) Priorität: **05.04.1993 DE 4311197**

(43) Veröffentlichungstag der Anmeldung:
**14.02.2001 Patentblatt 2001/07**

(62) Dokumentnummer(n) der früheren Anmeldung(en) nach Art. 76 EPÜ:
**94911105.8 / 0 738 311**

(73) Patentinhaber: **Patent-Treuhand-Gesellschaft für elektrische Glühlampen mbH**
**81543 München (DE)**

(72) Erfinder:
- **Zachau, Martin**
**82269 Geltendorf (DE)**
- **Schmidt, Dieter**
**80798 München (DE)**
- **Müller, Ulrich**
**81479 München (DE)**

(56) Entgegenhaltungen:
**EP-A- 0 498 689** **US-A- 4 423 349**

- **PATENT ABSTRACTS OF JAPAN vol. 010, no. 217 (E-423), 29. Juli 1986 (1986-07-29) & JP 61 055839 A (OSAMU TADA), 20. März 1986 (1986-03-20)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Leuchtstofflampen gemäß dem Oberbegriff des Anspruchs 1.

Sie steht in engem Zusammenhang mit der deutschen Patentanmeldung P 43 11 197.1, in der eine neuartige Betriebsweise für dielektrisch behinderte Entladungen offenbart ist. Die dort näher erläuterte Lehre ermöglicht u.a. eine deutlich effizientere Erzeugung von UV- bzw. VUV-Strahlung, insbesondere mittels Excimeren - z.B. $Xe_2^*$, welches eine molekulare Bandenstrahlung im Bereich um 172 nm emittiert -, als dies bisher möglich war. Im folgenden soll mit dem Begriff "VUV-Strahlung" insbesondere elektromagnetische Strahlung mit Wellenlängen im Bereich zwischen ca. 145 nm und 185 nm bezeichnet werden.

Das Hauptanwendungsgebiet heutiger Leuchtstoffe in der Beleuchtungstechnik, d.h. zur Umwandlung kurzwelliger elektromagnetischer Strahlung in Licht, ist die Leuchtstofflampe. Diese basiert auf der Quecksilber-Niederdruckentladung, die Energie überwiegend in Form von UV-Strahlung emittiert. Dabei handelt es sich im wesentlichen um die Strahlung einer atomaren Spektrallinie mit einer Wellenlänge von ca. 254 nm.

Um dem wachsenden Umweltbewußtsein Rechnung zu tragen, werden in jüngster Zeit zunehmend quecksilberfreie UV- und VUV-Strahlungsquellen entwickelt. Bisher konnten allerdings nur relativ geringe UV- bzw. VUV-Ausbeuten (ca. 10 % bis 20 %, bei technisch relevanten Leistungsdichten) erzielt werden im Vergleich zur Quecksilber-Niederdruckentladung (ca. 70%). Ein Einsatz dieser quecksilberfreien UV- bzw. VUV-Strahler in der Ausgestaltung einer Leuchtstofflampe für die Allgemeinbeleuchtung war deshalb unwirtschaftlich und kam bisher nicht in Betracht. Daher bestand bisher auch nicht die Notwendigkeit nach Leuchtstoffen zu suchen, die sowohl im VUV-Bereich gut anregbar als auch bezüglich ihrer Emissionseigenschaften für Zwecke der Allgemeinbeleuchtung geeignet sind. Mit der in o.g. Patentanmeldung erläuterten Betriebsweise können nun erstmalig auch in quecksilberfreien Entladungen Wirkungsgrade, insbesondere zur Erzeugung von VUV-Strahlung von 65 % und mehr erzielt werden. Die hohen VUV-Ausbeuten werden insbesondere durch die sehr effiziente Erzeugung von $Xe_2^*$ - Excimeren realisiert. Dabei wird der Hauptteil der Strahlungsleistung im Wellenlängenbereich zwischen ca. 145 nm und 185 nm emittiert. Damit ist in Hinblick auf eine effiziente Strahlungserzeugung eine echte Alternative für die konventionelle Quecksilber-Niederdruckentladung gefunden. Für einen Einsatz der neuartigen Strahlungsquelle in der Allgemeinbeleuchtung ist allerdings die Konversion der kurzwelligen VUV-Strahlung in Licht erforderlich, d.h. in den sichtbaren Bereich des optischen Spektrums.

Der Erfindung liegt die Aufgabe zugrunde eine Leuchtstofflampe mit für Zwecke der Allgemeinbeleuchtung geeigneter Leuchtstoffbeschichtung anzugeben, wobei die Leuchtstofflampe auf einem VUV-Strahler basiert, der insbesondere Wellenlängen im Bereich zwischen ca. 145 nm und 185 nm erzeugt. Diese Aufgabe wird durch den Anspruch 1 gelöst. Weitere vorteilhafte Merkmale finden sich in den Ansprüchen 2 bis 4.

Eine charakterisierende Größe für die Effizienz der Konversion elektromagnetischer Strahlung durch Leuchtstoffe ist deren wellenlängenabhängige Anregbarkeit. Sie ist proportional dem Produkt aus Absorption und Quantenwirkungsgrad. Letzterer ist die Wahrscheinlichkeit für die Erzeugung eines Photons durch den Leuchtstoff, nachdem ein Photon kürzerer Wellenlänge (höherer Energie) absorbiert wurde. Maximale Anregbarkeit liegt demnach vor, wenn sowohl die Absorption als auch der Quantenwirkungsgrad 100 % betragen, d.h. jedes einfallende Photon absorbiert und in ein Photon längerer Wellenlänge (niederer Energie) konvertiert wird.

In Voruntersuchungen ist gezielt die Anregbarkeit einer Vielzahl für den Einsatz in herkömmlichen Leuchtstofflampen mit Quecksilber-Niederdruckentladung gebräuchlicher Leuchtstoffe mit VUV-Strahlung meßtechnisch ermittelt worden. Dabei hat es sich gezeigt, daß bei allen Leuchtstoffen mit abnehmender Wellenlänge der einfallenden Strahlung zwar die Absorption im wesentlichen zunimmt, die Anregbarkeit aber bei Unterschreiten einer Grenzwellenlänge überraschenderweise drastisch abnimmt. Dieses Verhalten ist in den Figuren 1-3 exemplarisch gezeigt. Dargestellt ist die normierte Anregbarkeit als Funktion der Wellenlänge je eines Rot-($Y_2O_3$:$Eu^{3+}$), Grün-($GdMgB_5O_{10}$:$Ce,Tb$) und Blauleuchtstoffs ($BaMgAl_{10}O_{17}$:$Eu$). Als Folge weisen einige Leuchtstoffe, die in herkömmlichen Leuchtstofflampen vorteilhaft eingesetzt werden, z.B. der Grünleuchtstoff $CeMgAl_{11}O_{19}$:$Tb^{3+}$, eine unzureichende Anregbarkeit durch VUV-Strahlung auf. In diesem Fall erstreckt sich der Abfall der Anregbarkeit bereits über den gesamten VUV-Bereich. Andere Leuchtstoffe hingegen lassen sich durch VUV-Strahlung besser anregen, da der Abfall erst am kurzwelligen Ende des VUV-Bereichs einsetzt. Ein Beispiel dafür ist der ebenfalls bekannte Blauleuchtstoff $BaMgAl_{10}O_{17}$:$Eu^{2+}$ (s. Figur 3).

Die dem beobachteten Verhalten zugrunde liegenden physikalischen Vorgänge sind noch nicht vollständig geklärt. Gegenwärtig, wird angenommen, daß mögliche Ursachen in grundlegend unterschiedlichen Absorptionsmechanismen für Strahlung mit Wellenlängen unterhalb der Grenzwellenlänge begründet sind. Die Strahlungsleistung der für die Leuchtstoffanregung wichtigsten Spektrallinie der herkömmlichen Quecksilber-Niederdruckentladung mit der Wellenlänge 254 nm führt hauptsächlich zu einer Anregung der auch als Leuchtzentren wirkenden Aktivatoratome oder ggf. vorhandener Koaktivatoren (Sensibilisatoren). Die Sensibilisatoren transferieren in diesem Fall die Anregungsenergie auf die Aktivatoratome. Unterhalb der Grenzwellenlänge nimmt die Absorption durch das Wirtsgitter sprunghaft zu (der Absorptionskoeffizient erreicht Werte in der Größenordnung von $10^5$ $cm^{-1}$ und mehr). Die Grenzwellenlänge kann deshalb vereinfachend als die Wellenlänge interpretiert werden, die ein Photon höchstens haben

darf um ein Elektron aus dem Valenzband des Wirtsgitters gerade noch in das Leitungsband anregen zu können. Die entsprechende Energiedifferenz zwischen Valenz- und Leitungsband wird im folgenden als optische Bandlücke bezeichnet und die Grenzwellenlänge als optische Bandkante.

Wird ein Elektron des Wirtsgitters vom Valenz- in das Leitungsband angeregt, indem es ein Photon entsprechender Energie absorbiert, entsteht ein "Elektron-Loch-Paar", wobei Elektron und Loch frei oder als Exziton gebunden sein können (Details hierzu finden sich z.B. in: Charles Kittel, "Einführung in die Festkörperphysik", Oldenbourg Verlag, München, 5. Auflage, 1980, S. 359 ff). Ein Exziton ist elektrisch neutral und kann sich deshalb innerhalb des Gitters relativ frei bewegen und seine Energie an einen Stoßpartner abgeben, beispielsweise an ein Aktivatoratom. Dieses kann seinerseits Energie in Form von Licht abstrahlen. Für zunehmende Photonenenergien (abnehmende Wellenlängen der absorbierten Strahlung) wurde experimentell eine deutliche Abnahme der Anregbarkeit ermittelt, sobald die Photonenenergien größer als die optische Bandlücke (d.h. die Wellenlängen der Photonen kleiner als die optische Bandkante) sind. Ohne daß eine Festlegung auf irgendeine theoretische Erklärung beabsichtigt ist, werden gegenwärtig sowohl Oberflächen- als auch Volumenstörstellen für diese Beobachtung verantwortlich gemacht. Die Störstellen "fangen" zunehmend die freien Elektronen und Löcher bzw. die Exzitonen ein, bevor letztere ihre Energie an die Aktivatoratome (d.h. Leuchtzentren) abgeben können. Von den Störstellen - das können Verunreinigungen, Versetzungen o.ä. sein - geht die Energie strahlungslos in verschiedene Verlustkanäle und führt letztlich nur zu einer unerwünschten Erwärmung des Leuchtstoffs.

Hier setzt die Lehre der Erfindung ein, die gezielt jene Leuchtstoffe für Beleuchtungszwecke verwendet, die sich mit VUV-Strahlung effizient anregen lassen. Aufgrund der eingangs geschilderten Erkenntnisse handelt es sich hierbei um Leuchtstoffe, deren optische Bandlücke des Wirtsgitters oberhalb der niederenergetischen Grenze des Energiespektrums der VUV-Strahlung liegt, insbesondere oberhalb 6,7 eV. Geeignete Wirtsgitter sind z.B. Borate, Phosphate, Aluminate sowie Silikate. Das Wirtsgitter ist mit mindestens einer zusätzlichen Substanz dotiert, die als Leuchtzentrum fungiert und üblicherweise als Aktivator bezeichnet wird. Durch geeignete Wahl des Aktivators ist das optische Spektrum der Lumineszenz gezielt beeinflußbar. Dabei dient die Farbe der Lumineszenz zur Bezeichnung des betreffenden Leuchtstoffs. Die drei Grundfarben Rot, Grün und Blau sind für die Beleuchtungstechnik von. herausragendem Interesse, weil sich mit ihnen prinzipiell jede beliebige Mischfarbe, z.B. für die Effekt- oder Signalbeleuchtung sowie weißes Licht - besonders wichtig für die Allgemeinbeleuchtung - erzeugen läßt. Dazu werden die verschiedenen Leuchtstoffkomponenten geeignet kombiniert, beispielsweise gemischt oder in alternierender Folge angeordnet. Geeignete Aktivatoren sind z.B. $Eu^{3+}$ für Rotleuchtstoffe, $Tb^{3+}$ für Grünleuchtstoffe und $Eu^{2+}$ für Blauleuchtstoffe. Insbesondere können damit gezielt solche Leuchtstoffe aktiviert werden, deren Emissionsspektren besonders gut für einen Dreibandenleuchtstoff geeignet sind. Zur Optimierung sowohl der Lichtausbeute als auch der Farbwiedergabe einer Dreibandenlampe für die Allgemeinbeleuchtung muß die Hauptemission des Rotleuchtstoffes bei ca. 610 nm, des Grünleuchtstoffes bei ca. 540 nm und des Blauleuchtstoffes bei ca. 450 nm liegen (s. z.B. A.W. Thornton, J. Opt. Soc. Am. 61(1971)1155).

In einer weiteren Ausführung sind dem Wirtsgitter eine oder auch mehrere weitere Dotierungssubstanzen zugesetzt. Dabei handelt es sich ebenfalls um Aktivatoren, d.h. Leuchtzentren. Auf diese Weise ist es auch mit nur einem Leuchtstoff möglich, durch geeignete Wahl der verschiedenen Aktivatoren im Prinzip beliebige Mischfarben zu erzielen. Aus einem Leuchtstoff mit einem grün und einem rot lumineszierenden Aktivator wird z.B. gelbes Licht erzeugt. Für weißes Licht ist noch zusätzlich mindestens ein dritter, blau lumineszierender Aktivator erforderlich.

Je nach Lage ihrer optischen Bandkante innerhalb des hier interessierenden VUV-Bereichs lassen sich die effizient anregbaren - VUV-Leuchtstoffe grob in zwei Klassen einteilen. Bei der ersten Klasse wird mehr als 50 % der einfallenden VUV-Strahlungsleistung vom Wirtsgitter absorbiert und von dort zu den Leuchtzentren transferiert. Der restliche Anteil der VUV-Strahlungsleistung kann z.B. von den Aktivatoratomen direkt absorbiert werden. Ein Beispiel hierfür ist der Rotleuchtstoff

$$(Y_xGd_yEu_z)BO_3.$$

Es handelt sich um ein mit dreiwertigem Europium $Eu^{3+}$ aktiviertes Mischborat . Geeignete Werte für *x, y* und *z* sind $0 \le x \le 0{,}99$, $0 \le y \le 0{,}99$, $0{,}01 \le z \le 0{,}2$, bevorzugt $0{,}55 \le x \le 0{,}87$, $0{,}1 \le y \le 0{,}3$ und $0{,}03 \le z \le 0{,}15$, wobei jeweils die Randbedingung $x + y + z \approx 1$ erfüllt ist. Ein Beispiel für einen Blauleuchtstoff ist das mit zweiwertigem Europium $Eu^{2+}$ aktivierte Mischaluminat

$$(Ba_xEu_y)MgAl_{10}O_{17}.$$

Geeignete Werte für *x* und *y* sind $0{,}6 \le x \le 0{,}97$, $0{,}03 \le y \le 0{,}4$, bevorzugt $0{,}8 \le x \le 0{,}95$, $0{,}05 \le y \le 0{,}2$, wobei jeweils $x+y \approx 1$ gilt. Beispiele für mit dreiwertigem Terbium $Tb^{3+}$ aktivierte Grünleuchtstoffe sind: 1.) das Mischaluminat

$$(Y_x Gd_y Tb_z)_3 Al_5 O_{12},$$

wobei gilt: $0{,}1 \leq x \leq 0{,}99$, $0 \leq y \leq 0{,}9$, $0{,}03 \leq z \leq 0{,}4$ und $x+y+z \approx 1$, insbesondere $y = 0$, $0{,}8 \leq x \leq 0{,}99$, $0{,}01 \leq z \leq 0{,}2$ und $x+z \approx 1$, 2.) das Mischsilikat

$$(Y_x Sc_y Tb_z)_2 SiO_5,$$

wobei gilt: $0{,}6 \leq x \leq 0{,}99$, $0 \leq y \leq 0{,}1$, $0{,}01 \leq z \leq 0{,}4$ und $x+y+z \approx 1$, sowie 3.) das Mischborat

$$(Y_x Gd_y Tb_z) BO_3,$$

wobei gilt: $0 \leq x \leq 0{,}99$, $0 \leq y \leq 0{,}99$, $0{,}01 \leq z \leq 0{,}4$, bevorzugt $0{,}55 \leq x \leq 0{,}8$, $0{,}1 \leq y \leq 0{,}3$, $0{,}03 \leq z \leq 0{,}2$ und $x+y+z \approx 1$. Je näher die optische Bandkante zur oberen Grenze des VUV-Wellenlängenbereichs liegt, desto mehr dominiert die Absorption der VUV-Strahlung durch das Wirtsgitter. Im Extremfall liegt ausschließlich Wirtsgitterabsorption vor, d.h. mit und ohne Aktivator ergibt sich die gleiche Absorption.

Bei der zweiten Klasse hingegen wird mehr als 50 % der einfallenden VUV-Strahlungsleistung direkt vom Aktivator (d.h. dem Leuchtzentrum) absorbiert. Der restliche Anteil der VUV-Strahlungsleistung kann z.B. vom Wirtsgitter und ggf. weiteren Dotierungssubstanzen absorbiert werden. Diese Situation liegt vor, wenn die optische Bandkante des Wirtsgitters deutlich kleiner als die obere Grenze des VUV-Wellenlängenbereichs ist. Beispiele für diese Klasse von Leuchtstoffen sind mit dreiwertigem Terbium $Tb^{3+}$ aktivierte Mischphosphate entsprechend der allgemeinen Formel

$$(Ln_x Ce_y Sc_w Tb_z) PO_4,$$

wobei Ln eines der Elemente Lanthan La, Yttrium Y oder Gadolinium Gd oder eine Mischung dieser Elemente bezeichnet. Geeignete Werte für *x, y, w* und *z* sind $0{,}35 \leq x \leq 0{,}95$, $0 \leq y \leq 0{,}5$, $0 \leq w \leq 0{,}2$, $0{,}05 \leq z \leq 0{,}5$, bevorzugt $w=0$, $0{,}45 \leq x \leq 0{,}8$, $0{,}1 \leq y \leq 0{,}3$, $0{,}1 \leq z \leq 0{,}25$ , wobei jeweils $w + x + y + z \approx 1$ gilt. In diesen Fällen wird die Anregungsleistung fast ausschließlich durch den Aktivator $Tb^{3+}$ selbst absorbiert. Das bei der Anregung mit Strahlung der Wellenlänge 254 nm als Sensibilisator notwendige $Ce^{3+}$ ist im vorliegenden Fall der VUV-Anregung für die Leuchtstoffe dieser Klasse von untergeordneter Bedeutung und kann möglicherweise weggelassen werden, ohne daß eine Änderung der Lichtausbeute erfolgt. Ob $Ce^{3+}$ in diesem Zusammenhang überhaupt eine (wenn auch nur kleine) Verbesserung bewirkt, ist noch nicht abschließend geklärt.

In der erfindungsgemäßen Ausführungsform ist der Leuchtstoff der allgemeinen Formel $(Ln_xCe_ySc_w Tb_z)PO_4$, wobei Ln eines der Elemente La, Y oder Gd oder eine Mischung dieser Elemente bezeichnet und wobei gilt: $0{,}35 \leq x \leq 0{,}95$, $0 \leq y \leq 0{,}5$, $0 \leq w \leq 0{,}2$, $0{,}05 \leq z \leq 0{,}5$ und zu einer Leuchtstoffbeschichtung verarbeitet. Dazu ist die Leuchtstoffbeschichtung vorteilhaft auf der Innenwandfläche eines Lampenkolbens aufgetragen, wobei innerhalb des Lampenkolbens VUV-Strahlung, insbesondere mit Wellenlängen im Bereich zwischen ca. 145 nm und 185 nm erzeugt wird. Diese kurzwellige Strahlung wird in Luft und den meisten Lampengefäßmaterialien bereits stark absorbiert, weshalb eine Beschichtung auf der Außenwand spezielle und damit teuere VUV-transparente Materialien - z.B. spezielle Quarzgläser wie SUPRASIL® (Fa. Heraeus) - erfordern würde. Außerdem müßte die Lampe in diesem Fall zum Schutz der Beschichtung gegen Berührung einen zusätzlichen Außenkolben aufweisen.

Darüber hinaus kann es vorteilhaft sein, die Oberfläche der Leuchtstoffe, d.h. der einzelnen Leuchtstoffkörner und/oder der aufgetragenen Leuchtstoffbeschichtung mit einer Schutzschicht zu versehen, die im VUV-Bereich ausreichend transparent ist, z.B. aus $MgF_2$.

Die Erfindung wird im folgenden anhand Beispiel 2 näher erläutert. Zunächst sind einige lichttechnische Daten von Leuchtstoffen aufgeführt, die durch Anregung mit $Xe_2^*$-Excimerstrahlung ermittelt wurden. Die Größe $E_{Xe}$ gibt an, wie hoch die Anregbarkeit mit VUV-Strahlung (mit dem Spektrum der $Xe_2^*$-Excimer-strahlung im Wellenlängenbereich zwischen 145 nm und 185 nm gewichtetes Mittel) relativ zur maximalen Anregbarkeit ist, die bei einer bestimmten diskreten Wellenlänge erreicht wird. $E_{Xe}$ ist somit der Wert, auf den sich die Anregbarkeit eines Leuchtstoffes reduziert, wenn er nicht mit Strahlung der Wellenlänge seines Anregungsmaximums sondern mit dem gesamten Kontinuum der Excimerstrahlung im Wellenlängenbereich zwischen 145 nm und 185 nm bestrahlt wird. $Q^*_{Xe}$ bezeichnet den angenäherten Quantenwirkungsgrad (er wird von der Präparation des Leuchtstoffes beeinflußt und wurde nicht optimiert, so

daß die angegebenen Werte als untere Grenzen zu verstehen sind). Es zeigen

Fig. 1 das VUV-Anregungsspektrum des Rotleuchtstoffes $Y_2O_3:Eu^{3+}$ (Referenzbeispiel),

Fig. 2 das VUV-Anregungsspektrum des Grünleuchtstoffs $CeMgAl_{11}O_{19}:Tb^{3+}$ (Referenzbeispiel),

Fig. 3 das VUV-Anregungsspektrum des Blauleuchtstoffs $BaMgAl_{10}O_{17}:Eu^{2+}$ (Referenzbeispiel),

Fig. 4 das VUV-Anregungsspektrum des Rotleuchtstoffes $(Y_{0,72}Gd_{0,2}Eu_{0,08})BO_3$ (Referenzbeispiel),

Fig. 5 das VUV-Anregungsspektrum des Grünleuchtstoffs $(La_{0,43}Ce_{0,39}Tb_{0,18})PO_4$,

Fig. 6a die Seitenansicht einer Leuchtstofflampe mit Dreibanden-Leuchtstoffbeschichtung,

Fig. 6b den Querschnitt entlang A-A der in Fig. 6a gezeigten Leuchtstofflampe,

Fig. 7 das Emissionsspektrum der Dreibanden-Leuchtstofflampe aus den Figuren 6a,b.

**Beispiel 1** (Referenzbeispiel)

Das erste Ausführungsbeispiel beschreibt Rotleuchtstoffe mit gut geeigneten Emissionsspektren. Es handelt sich jeweils um mit dreiwertigem Europium aktivierte Seltenerd-Mischborate. Die folgende Tabelle zeigt Leuchtstoffe mit verschiedenen Zusammensetzungen, wobei die erste Zusammensetzung sowohl Yttrium Y als auch Gadolinium Gd, die beiden folgenden nur Yttrium bzw. nur Gadolinium enthalten. In Figur 4 ist das Anregungsspektrums des Leuchtstoffs Nr.1 gezeigt.

| **Nr.** | **Zusammensetzung** | $E_{Xe}$ | $Q^*_{Xe}$ |
|---|---|---|---|
| **1** | $(Y_{0,72}Gd_{0,2}Eu_{0,08})BO_3$ | 0,89 | 0,69 |
| **2** | $(Y_{0,92}Eu_{0,08})BO_3$ | 0,86 | 0,57 |
| **3** | $(Gd_{0,92}Eu_{0,08})BO_3$ | 0,84 | 0,57 |

**Beispiel 2**

Das zweite Ausführungsbeispiel beschreibt Grünleuchtstoffe mit sehr gut geeigneten Emissionsspektren. Es handelt sich um mit dreiwertigem Terbium aktivierte Seltenerd-Mischphosphate. Die folgende Tabelle zeigt Leuchtstoffe mit verschiedenen Zusammensetzungen, die teilweise zusätzlich mit dreiwertigem Cer oder Scandium als Koaktivator dotiert sind. Die ersten vier Leuchtstoffe enthalten Lanthan La. Bei den folgenden vier Leuchtstoffen ist das Lanthan durch Yttrium Y ersetzt, wobei Leuchtstoff Nr.8 noch Scandium Sc zugesetzt ist. Bei den letzten drei Leuchtstoffen ist das Lanthan durch Gadolinium Gd ersetzt, wobei dem letzten Leuchtstoff wiederum zusätzlich Scandium Sc zugesetzt ist. Figur 5 zeigt das Anregungsspektrums des Leuchtstoffs $(La_{0,44}Ce_{0,43}Tb_{0,13})PO_4$.

| Nr. | Zusammensetzung | $E_{Xe}$ | $Q^*_{Xe}$ |
|---|---|---|---|
| **1** | $(La_{0,43}Ce_{0,39}Tb_{0,18})PO_4$ | 0,89 | 0,80 |
| **2** | $(La_{0,57}Ce_{0,29}Tb_{0,14})PO_4$ | 0,88 | 0,78 |
| **3** | $(La_{0,65}Ce_{0,20}Tb_{0,15})PO_4$ | 0,87 | 0,76 |
| **4** | $(La_{0,828}Tb_{0,172})PO_4$ | 0,86 | 0,74 |
| **5** | $(Y_{0,434}Ce_{0,394}Tb_{0,172})PO_4$ | 0,89 | 0,75 |
| **6** | $(Y_{0,65}Ce_{0,2}Tb_{0,15})PO_4$ | 0,91 | 0,72 |
| **7** | $(Y_{0,828}Tb_{0,172})PO_4$ | 0,82 | 0,65 |
| **8** | $(Y_{0,818}Sc_{0,01}Tb_{0,172})PO_4$ | 0,89 | 0,73 |
| **9** | $(Gd_{0,434}Ce_{0,394}Tb_{0,172})PO_4$ | 0,89 | 0,82 |

(fortgesetzt)

| Nr. | Zusammensetzung | $E_{Xe}$ | $Q^{*Xe}$ |
|---|---|---|---|
| **10** | $(Gd_{0,828}Tb_{0,172})PO_4$ | 0,84 | 0,71 |
| **11** | $(Gd_{0,821}Sc_{0,0067}Tb_{0,172})PO_4$ | 0,89 | 0,8 |

**Beispiel 3** (Referenzbeispiel)

Das dritte Ausführungsbeispiel beschreibt ebenfalls Grünleuchtstoffe mit sehr gut geeigneten Emissionsspektren. Wie folgende Tabelle zeigt, handelt es sich um zwei mit dreiwertigem Terbium aktivierte Yttriumborate, wobei Nr. 2 zusätzlich Gadolinium enthält.

| **Nr.** | **Zusammensetzung** | $E_{Xe}$ | $Q^{*}_{Xe}$ |
|---|---|---|---|
| **1** | $(Y_{0,9}Tb_{0,1})BO_3$ | 0,84 | 0,62 |
| **2** | $(Y_{0,7}Gd_{0,2}Tb_{0,1})BO_3$ | 0,86 | 0,65 |

**Beispiel 4** (Referenzbeispiel)

Das vierte Ausführungsbeispiel beschreibt einen weiteren Grünleuchtstoff. Es handelt sich um ein mit dreiwertigem Terbium aktiviertes Seltenerd-Mischsilikat, welches Yttrium und Scandium enthält gemäß der Zusammensetzung $(Y_{0,924}Sc_{0,002}Tb_{0,074})_2SiO_5$. Folgende Werte wurden ermittelt: $E_{Xe}$ = 0,94, $Q^{*}_{Xe}$ = 0,8.

**Beispiel 5** (Referenzbeipiel)

Das fünfte Ausführungsbeispiel beschreibt zwei weitere Grünleuchtstoffe. Es handelt sich um mit dreiwertigem Terbium aktivierte Seltenerd-Mischaluminate. Der erste Leuchtstoff ist ein Yttriumaluminat folgender Zusammensetzung $(Y_{0,9}Tb_{0,1})_3Al_5O_{12}$. Folgende Werte wurden ermittelt: $E_{Xe}$ = 0,94, $Q^{*}_{Xe}$ = 0,76. Beim zweiten - in seinen Eigenschaften gleichwertigen - Leuchtstoff ist Yttrium zu 20% durch Gadolinium substituiert: $(Y_{0,7}Gd_{0,2}Tb_{0,1})_3Al_5O_{12}$

**Beispiel 6** (Referenzbeispiel)

Das sechste Ausführungsbeispiel beschreibt einen Blauleuchtstoff. Es handelt sich um ein mit zweiwertigem Europium aktiviertes Mischaluminat gemäß der Zusammensetzung $(Ba_{0,94}Eu_{0,06})MgAl_{10}O_{17}$. Folgende Werte wurden ermittelt: $E_{Xe}$ = 0,96, $Q^{*}_{Xe}$ = 0,86.

**Beispiel 7** (Referenzbeispiel)

In Fig. 6a ist die Seitenansicht und in Fig. 6b der Querschnitt einer Leuchtstofflampe 1 gezeigt, die insbesondere für Beleuchtungszwecke geeignet ist. Das kreiszylinderförmige Entladungsgefäß 2 besteht aus 0,7 mm dickem DURAN®-Glas (Fa. Schott), weist einen Durchmesser von ca. 50 mm auf und ist mit Xenon bei einem Druck von 173 hPa gefüllt. Zentrisch axial innerhalb des Entladungsgefäßes 2 ist eine aus einem Edelstahlstab mit kreisförmigem Querschnitt und einem Durchmesser von 2 mm bestehende Innenelektrode 3 angeordnet. Auf der Außenwand des Entladungsgefäßes 2 sind achsparallel und gleichmäßig verteilt zwölf 1 mm breite und 8 cm lange Leitsilberstreifen als Außenelektroden 4 angeordnet. Die Innenwand des Entladungsgefäßes 2 ist mit einer Leuchtstoffschicht 6 beschichtet. Es handelt sich dabei um eine Dreibanden-Leuchtstoffmischung mit der Blaukomponente B: $(Ba_{0,94}Eu_{0,06})MgAl_{10}O_{17}$, der Grünkomponente G: $(La_{0,43}Ce_{0,39}Tb_{0,18})PO_4$ und der Rotkomponente R: $(Y_{0,72}Gd_{0,2}Eu_{0,08})BO_3$. Die Komponenten sind im Verhältnis B:G:R=0,085:0,555:0,36 gemischt. An die Innenelektrode 3 wird mittels Edison-Sockel 7eine pulsförmige periodische Spannung angelegt, die bezüglich der Außenelektrode ca. 4 kV beträgt, bei einer mittleren Pulsdauer von ca. 1,2 µs und einer Pulsfrequenz von ca. 25 kHz. Damit wird eine Lichtausbeute von 40 lm/W erzielt. Die Farbtemperatur beträgt 4000 K und der Farbort gemäß der Farbnormtafel nach CIE hat die Koordinaten $x$ = 0,38 und $y$ = 0,377. Das Emissionsspektrum dieser Lampe ist in Figur 6 dargestellt.

## Patentansprüche

1. Leuchtstofflampe mit einer Leuchtstoffbeschichtung auf der Innenwandfläche des Lampenkolbens, wobei innerhalb des Lampenkolbens VUV-Strahlung, insbesondere mit Wellenlängen im Bereich zwischen ca. 145 nm und 185 nm erzeugt wird, **dadurch gekennzeichnet, daß** die Leuchtstoffbeschichtung ein Mischphosphat entsprechend der allgemeinen Formel

$$(Ln_xCe_ySc_wTb_z)PO_4$$

umfaßt, wobei Ln eines der Elemente La, Y oder Gd oder eine Mischung dieser Elemente bezeichnet und wobei gilt: $0{,}35 \leq x \leq 0{,}95$, $0 \leq y \leq 0{,}5$, $0 \leq w \leq 0{,}2$, $0{,}05 \leq z \leq 0{,}5$ und $w+x+y+z \approx 1$.

2. Leuchtstofflampe nach Anspruch 1, **dadurch gekennzeichnet, daß** $w = 0$ sowie $x,y$ und $z$ in den Bereichen $0{,}45 \leq x \leq 0{,}8$, $0{,}1 \leq y \leq 0{,}3$, $0{,}1 \leq z \leq 0{,}25$ liegen und $x+y+z \approx 1$.

3. Leuchtstofflampe nach einem der Ansprüche 1 und 2, **dadurch gekennzeichnet, daß** die Oberfläche der Leuchtstoffbeschichtung mit einer Schutzschicht versehen ist.

4. Leuchtstofflampe nach Anspruch 3, **dadurch gekennzeichnet, daß** die Schutzschicht aus $MgF_2$ besteht.

## Claims

1. Fluorescent lamp having a fluorescent substance coating on the internal wall surface of the lamp bulb, in which VUV radiation, especially of wavelengths in the range between approximately 145 nm and 185 nm, is generated within the lamp bulb, **characterized in that** the fluorescent substance coating comprises a mixed phosphate according to the general formula

$$(Ln_xCe_ySc_wTb_2)\ PO_4$$

In which Ln designates one of the elements La, Y or Gd or a mixture of these elements, and in which the following are applicable: $0.35 \leq x \leq 0.95$, $0 \leq y \leq 0.5$, $0 \leq w \leq 0.2$,
$0.05 \leq z \leq 0.5$ and $w + x + y + z \approx 1$.

2. Fluorescent lamp according to Claim 1, **characterized in that** $w = 0$ and x, y and z lie in the ranges $0.45 \leq x \leq 0.8$, $0.1 \leq y \leq 0.3$ and $0.1 \leq z \leq 0.25$, and $x + y + z \approx 1$.

3. Fluorescent lamp according to one of Claims 1 and 2, **characterized in that** the surface of the fluorescent substance coating is provided with a protective layer.

4. Fluorescent lamp according to Claim 3, **characterized in that** the protective layer comprises $MgF_2$.

## Revendications

1. Lampe fluorescente comprenant un revêtement de substance luminescente sur la face intérieure de la paroi de l'ampoule de la lampe, un rayonnement dans l'ultraviolet lointain, notamment ayant des longueurs d'ondes dans le domaine compris entre environ 145 nm et 185 nm, étant produit à l'intérieur de l'ampoule de la lampe, **caractérisée en ce que** le revêtement de substance luminescente comprend un phosphate mixte correspondant à la formule générale

$$(Ln_xCe_ySc_wTb_z)PO_4$$

dans laquelle Ln désigne l'un des éléments La, Y ou Gd ou un mélange de ces éléments et l'on a : $0{,}35 \leq x \leq 0{,}95$,

$0 \leq y \leq 0,5$,
$0 \leq w \leq 0,2$, $0,05 \leq z \leq 0,5$ et $w + x + y + z \approx 1$

**2.** Lampe fluorescente suivant la revendication 1, **caractérisée en ce que** $w = 0$ et x, y et z se trouvent dans les intervalles $0,45 \leq x \leq 0,8$, $0,1 \leq y \leq 0,3$, $0,1 \leq z \leq 0,25$, et $x+y+z \approx 1$.

**3.** Lampe fluorescente suivent l'une des revendications 1 et 2, **caractérisée en ce que** la surface de revêtement en substance luminescente est munie d'une couche de protection.

**4.** Lampe fluorescente suivant la revendication 3, **caractérisée en ce que** le couche de protection est en $MgF_2$.

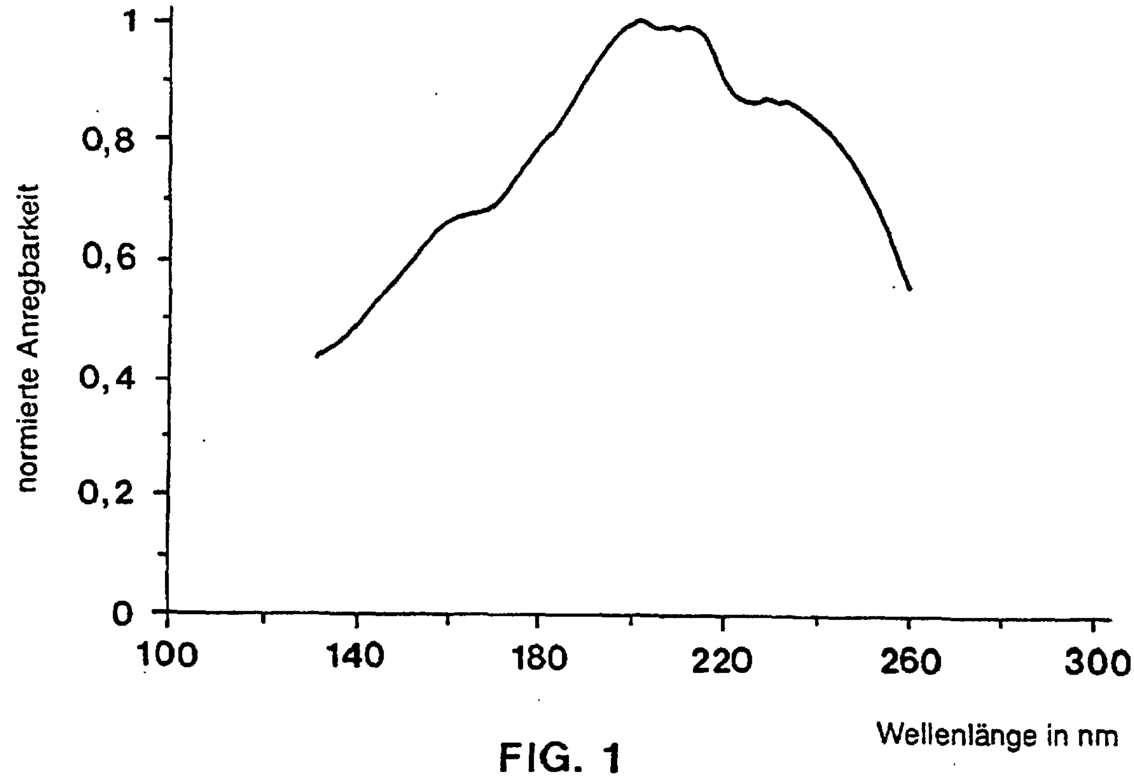
1
0,8
0,6
0,4
0,2
0
normierte Anregbarkeit
100
140
180
220
260
300
Wellenlänge in nm

FIG. 1

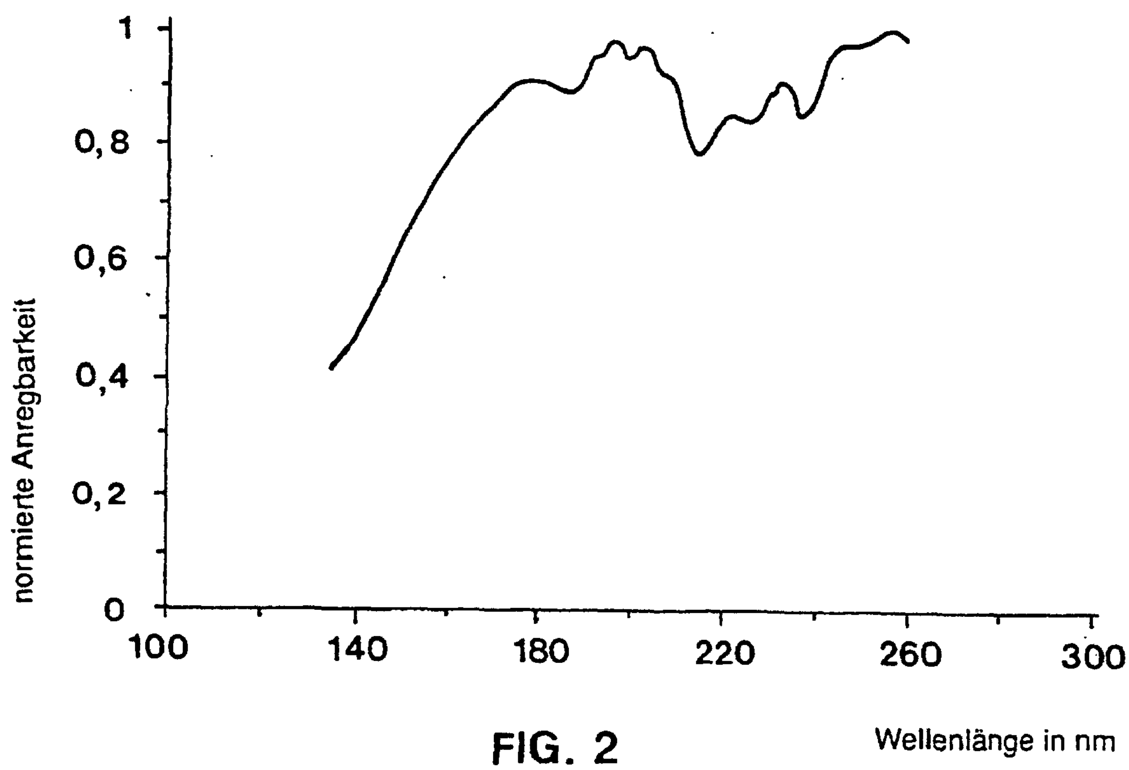
1
0,8
0,6
0,4
0,2
0
normierte Anregbarkeit
100
140
180
220
260
300
Wellenlänge in nm

FIG. 2

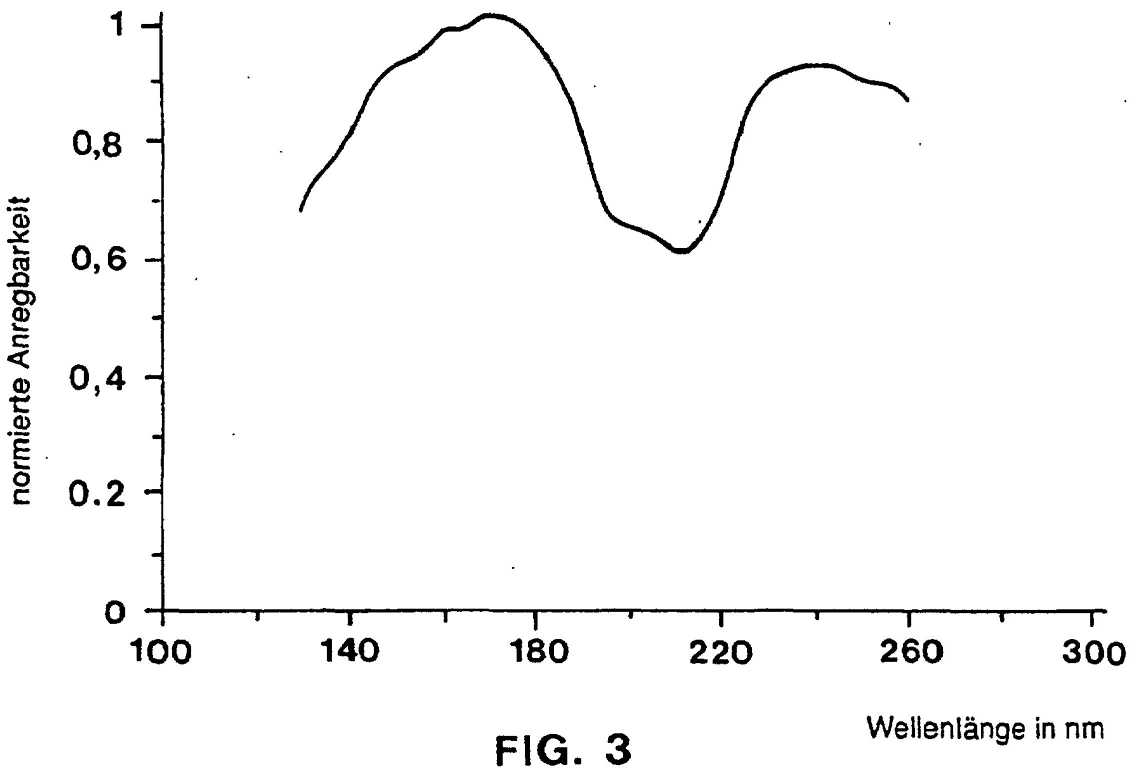

normierte Anregbarkeit
1
0,8
0,6
0,4
0.2
0
100
140
180
220
260
300
Wellenlänge in nm


FIG. 3

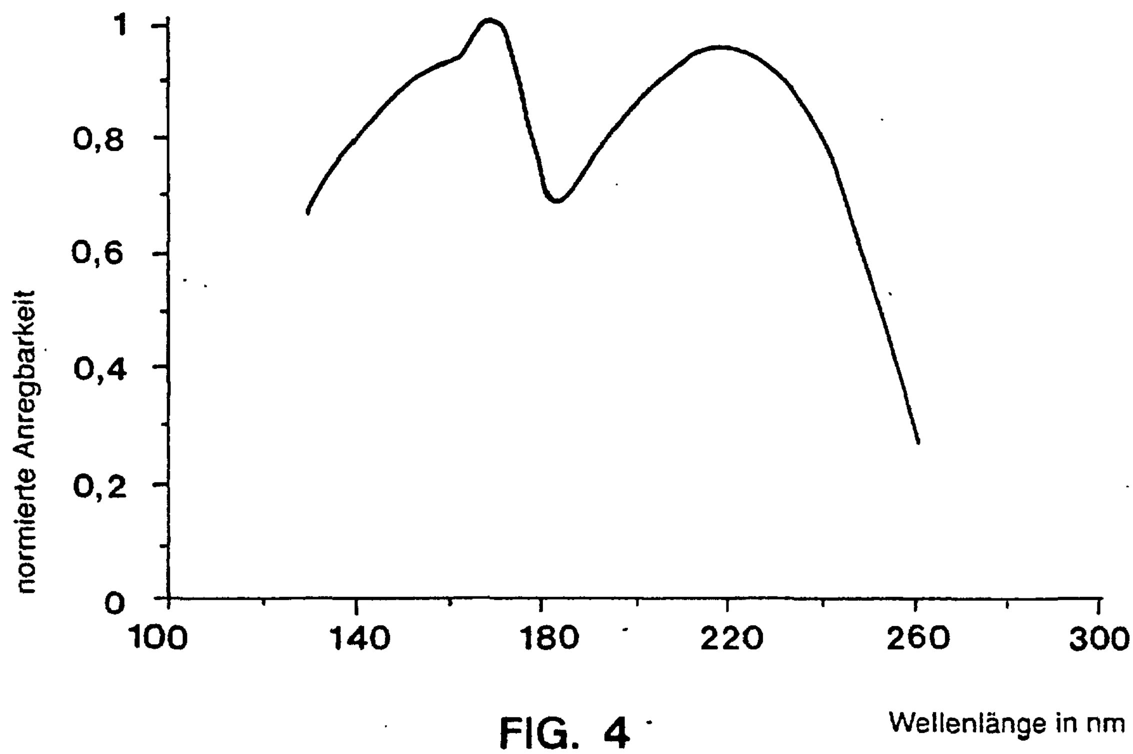

normierte Anregbarkeit
1
0,8
0,6
0,4
0,2
0
100
140
180
220
260
300
Wellenlänge in nm


FIG. 4

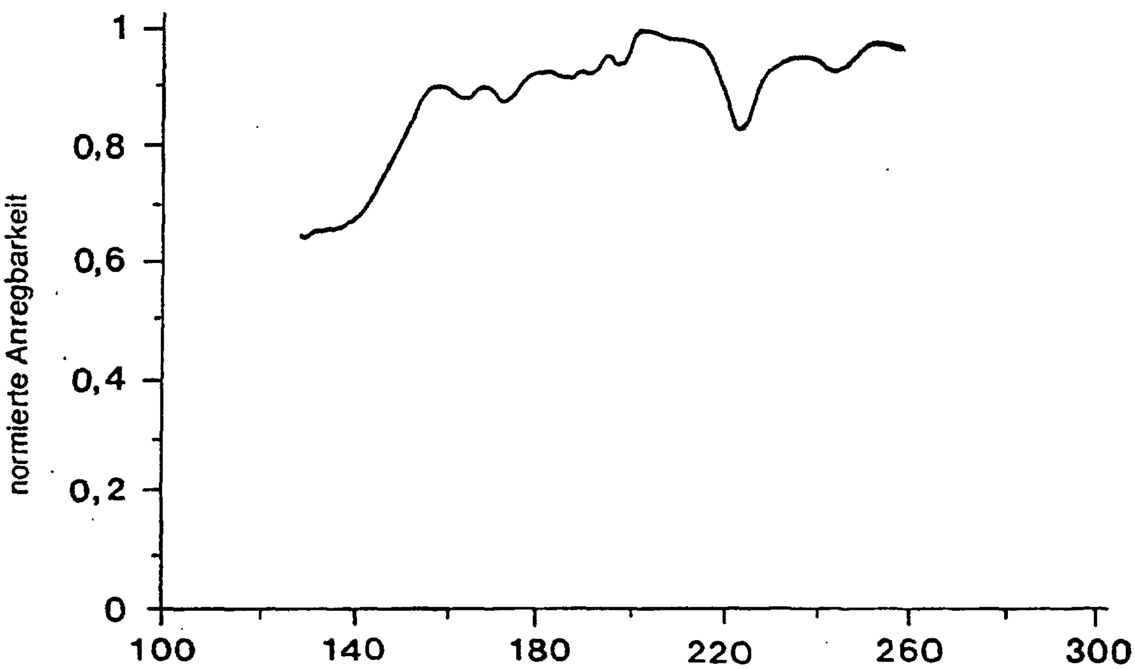
normierte Anregbarkeit
1
0,8
0,6
0,4
0,2
0
100
140
180
220
260
300
Wellenlänge in nm

FIG. 5

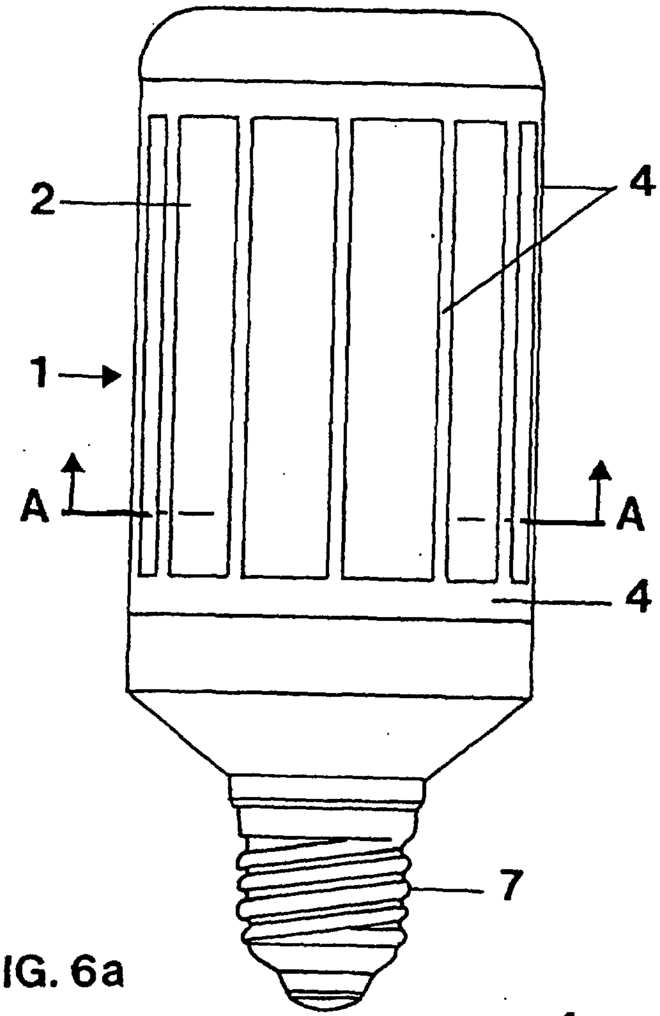


FIG. 6a

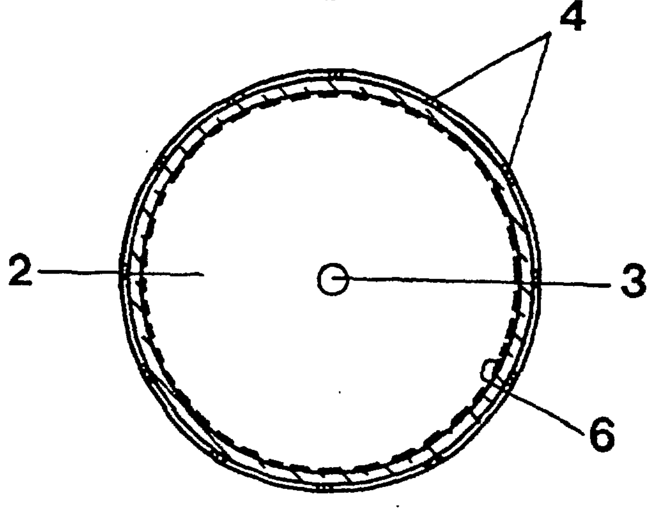


FIG. 6b A-A

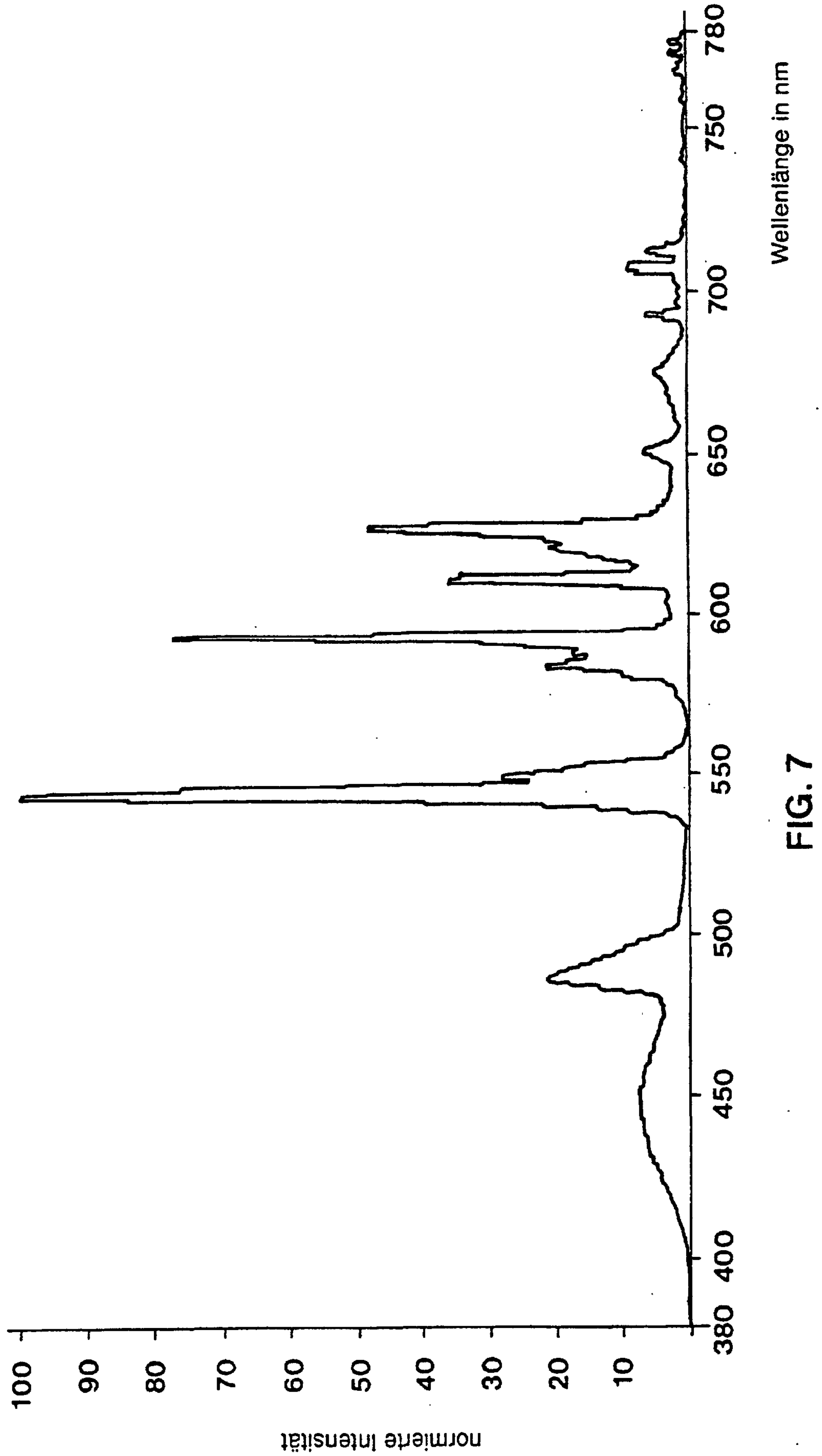
100
90
80
70
60
50
40
30
20
10
380
400
450
500
550
600
650
700
750
780
Wellenlänge in nm
normierte Intensität

FIG. 7